# DEMANDE DE BREVET EUROPEEN

(11) **EP 3 835 438 A1**
(43) Date de publication de la demande: **16.06.2021**
(21) Numéro de dépôt: 19215959.8
(22) Date de dépôt: 13.12.2019
(51) Int. Cl.: C21D 1/18, C21D 8/00, C22C 38/40, A44C 5/00, B22F 3/105, G04B 37/22

(54) **ACIER INOXYDABLE DUR PARAMAGNETIQUE ET SON PROCEDE DE FABRICATION**

(71) Demandeur: The Swatch Group Research and Development Ltd, 2074 Marin (CH)
(72) Inventeur: PORRET, M. Joël, Marin-Epagnier 2074 (CH)
(74) Mandataire: ICB SA

(57) **Abrégé**

La présente invention se rapporte à un acier inoxydable paramagnétique avec une composition chimique comprenant en poids :
- 26 ≤ Cr ≤ 40%,
- 5 ≤ Ni ≤ 20%,
- 0 ≤ Mn ≤ 5%,
- 0 ≤ Al ≤ 5%,
- 0 ≤ Mo ≤ 3%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.1%,
- 0 ≤ N ≤ 0.1%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%,
ledit acier ayant une dureté HV10 comprise entre 500 et 900.

Elle se rapporte également à une pièce notamment un composant horloger réalisé dans cet acier et au procédé de fabrication de la pièce.

## Description

### Domaine de l'invention

L'invention concerne un acier inoxydable paramagnétique ayant une dureté comprise entre 500 et 900 HV et la pièce notamment le composant horloger réalisé dans cet acier. Elle concerne également le procédé de fabrication de cette pièce en acier inoxydable.

### Arrière-plan de l'invention

Les alliages métalliques durs et non ferromagnétiques trouvent des applications dans de nombreux domaines, principalement pour des composants soumis à de fortes contraintes mécaniques et/ou tribologiques et devant rester insensibles aux champs magnétiques. C'est notamment le cas pour de nombreux composants horlogers, comme par exemple des roues, des pignons, des axes ou encore des ressorts au niveau du mouvement. Pour l'habillage externe, il est également intéressant d'obtenir des duretés élevées, par exemple pour la carrure, la lunette, le fond ou encore la couronne. En effet, une dureté élevée permet généralement d'obtenir une très bonne polissabilité pour un aspect esthétique de qualité, ainsi qu'une meilleure résistance à la rayure et à l'usure, et donc une bonne durabilité de ces composants exposés à l'environnement extérieur.

En métallurgie, différents mécanismes permettent de durcir les alliages, en fonction de leurs compositions chimiques et de leurs histoires thermomécaniques. On connait ainsi le durcissement par solution solide, le durcissement structural, l'écrouissage, la transformation martensitique dans les aciers, la décomposition spinodale, ou encore le durcissement par diminution de la taille de grain (Hall Petch). Dans les alliages les plus remarquables, plusieurs de ces mécanismes de durcissement sont mis à profit simultanément. Toutefois, les alliages non ferromagnétiques qui présentent des duretés supérieures à 500 HV sont rares. De plus, pour atteindre un tel niveau de dureté, les alliages non ferromagnétiques cristallins nécessitent généralement un fort degré d'écrouissage, avant un éventuel traitement thermique visant à obtenir la dureté maximale par précipitation de secondes phases. C'est le cas par exemple des aciers inoxydables austénitiques, uniquement durcissables par écrouissage, ou encore de quelques superalliages austénitiques, durcissables par écrouissage suivi d'un traitement thermique de précipitation. En pratique, la fabrication de composants dans ces alliages à l'état écroui est difficile. Tout d'abord, en cas de mise en forme par forgeage, l'obtention du bon degré d'écrouissage pour obtenir la dureté requise n'est pas triviale, spécialement pour des pièces à la géométrie complexe. Comme alternative, on peut faire de l'usinage dans des semi-produits présentant un degré écrouissage défini et homogène, mais il n'est pas toujours évident de se procurer les bons formats de matière avec le degré d'écrouissage requis. De plus, les éventuelles opérations d'usinage sont très difficiles et coûteuses, car l'alliage est déjà à l'état durci, du moins partiellement. Finalement, si le procédé utilisé n'implique pas de déformation plastique, comme certains procédés de métallurgie des poudres ou de fabrication additive, il n'est simplement pas possible de durcir ces alliages. Comme alternative, il serait possible de fabriquer des alliages ayant intrinsèquement une dureté supérieure à 500 HV, comme certains alliages à haute entropie ou certains intermétalliques par exemple, mais ils seraient à nouveau très difficiles à usiner et quasi impossibles à déformer, de par leurs duretés très élevées et leurs très faibles ductilités. On comprend ainsi l'intérêt de trouver un alliage durcissable par traitement thermique sans nécessité d'un écrouissage préalable, tout en étant non ferromagnétique à l'état durci. La mise en forme se ferait ainsi à l'état mou et ductile, et un traitement thermique de durcissement serait effectué une fois la pièce terminée. C'est ce qui explique notamment l'énorme succès des aciers au carbone et des aciers inoxydables martensitiques, mais ces derniers sont malheureusement ferromagnétiques.

Pour obtenir des duretés supérieures à 500 HV dans les alliages non ferromagnétiques, d'autres solutions sont aujourd'hui largement utilisées. Différents procédés de durcissement de surface sont notamment appliqués sur les aciers inoxydables austénitiques ou les alliages de titane par exemple, après mise en forme des pièces. Toutefois, l'épaisseur de la couche durcie est généralement très faible, de l'ordre de quelques dizaines de micromètres, et l'aspect de surface est généralement modifié par le traitement. Pour des composants horlogers, Il faut donc retravailler les pièces après durcissement pour obtenir une surface propre et généralement polie. Toutefois, ces opérations de terminaison éliminent tout ou partie de la couche durcie et cette solution est donc peu utilisée en pratique, d'autant plus que les traitements de durcissement de surface sont généralement coûteux.

A nouveau, on comprend donc le besoin de trouver un alliage non ferromagnétique et durcissable par traitement thermique à 500-900 HV, plage de dureté dans laquelle se situent généralement les aciers au carbone à l'état trempé et revenu, les aciers inoxydables martensitiques, certains aciers inoxydables austénitiques fortement écrouis ou quelques superalliages austénitiques écrouis et traités thermiquement.

### Résumé de l'invention

La présente invention a pour objet de proposer une composition d'acier inoxydable optimisée pour obtenir un comportement paramagnétique et une dureté comprise entre 500 et 900 HV10 et ce par traitement thermique sans écrouissage préalable requis lors du procédé de fabrication.

La composition selon l'invention est la suivante en poids:
- 26 ≤ Cr ≤ 40%,
- 5 ≤ Ni ≤ 20%,
- 0 ≤ Mn ≤ 5%,
- 0 ≤ Al ≤ 5%,
- 0 ≤ Mo ≤ 3%;
- 0 ≤ Cu ≤ 2 %,
- 0 ≤ Si ≤ 5 %,
- 0 ≤ Ti ≤ 1%,
- 0 ≤ Nb ≤ 1%,
- 0 ≤ C ≤ 0.1%,
- 0 ≤ N ≤ 0.1%,
- 0 ≤ S ≤ 0.5%,
- 0 ≤ P ≤ 0.1%,
le solde étant constitué par du fer et des impuretés éventuelles ayant chacune une teneur inférieure ou égale à 0.5%.

Selon l'invention, le procédé de fabrication d'une pièce en acier inoxydable consiste à réaliser un premier traitement thermique ou thermomécanique sur une matière de base de la composition précitée dans le domaine ferritique ou ferritique-austénitique et à tremper ensuite la matière afin de conserver à température ambiante la structure ferritique ou ferritique-austénitique. Cette microstructure ferritique ou ferritique-austénitique est molle et donc ductile, ce qui permet une mise en forme aisée. Ensuite, après une éventuelle mise en forme, un traitement de durcissement est réalisé afin de transformer la ferrite en une phase austénitique et en une phase intermétallique sigma riche en chrome.

L'originalité de la présente invention provient en particulier de l'utilisation de la phase sigma comme source de durcissement, puisque cette phase a toujours été considérée comme néfaste et donc non désirée dans les aciers inoxydables. En effet, comme la phase sigma est riche en chrome et qu'elle se forme généralement aux joints de grain, elle diminue de façon drastique la résistance à la corrosion en réduisant la concentration en chrome des autres phases présentes dans l'alliage. Ensuite, elle fragilise très rapidement et fortement les aciers inoxydables, même en très faible quantité. En effet, cette phase possédant une structure tétragonale complexe, elle est intrinsèquement très fragile et sa présence aux joints de grain crée un chemin privilégié pour la propagation des fissures. Elle n'a donc jamais été mise à profit dans les aciers inoxydables, malgré ses deux propriétés particulièrement intéressantes qui sont sa dureté comprise entre 900 et 1100 HV10 et son caractère paramagnétique.

Selon l'invention, la composition de l'acier inoxydable et le procédé sont optimisés afin d'obtenir une fine répartition aussi bien de la phase sigma que de la phase austénitique sans formation privilégiée de la phase sigma aux joints de grain. Cette microstructure particulière constituée de deux phases non ferromagnétiques permet notamment d'obtenir un très bon compromis entre dureté et ténacité, une bonne résistance à la corrosion ainsi qu'une excellente polissabilité.

D'autres caractéristiques et avantages de la présente invention apparaîtront à la lecture de la description détaillée ci-dessous faisant référence aux figures suivantes.

### Brève description des figures

Les figures 1 et 2 représentent le diffractogramme d'un acier Fe-35%Cr-9%Ni (% poids) selon l'invention respectivement avant et après le traitement de durcissement.
La figure 3 représente une image obtenue par microscopie optique d'un acier Fe-32%Cr-9%Ni (% poids) selon l'invention.
La figure 4 représente pour ce même alliage la courbe d'hystérèse magnétique.

### Description de l'invention

L'invention concerne des aciers inoxydables paramagnétiques ayant une dureté comprise entre 500 et 900 HV10 ainsi que le procédé de fabrication de pièces réalisées avec ces aciers. On entend par dureté HV10 une dureté Vickers mesurée selon la norme ISO 6507-1:2018. L'invention concerne également une pièce et plus précisément un composant horloger réalisé avec cet acier. Il peut s'agir d'un composant d'habillage choisi parmi la liste non exhaustive comprenant une carrure, un fond, une lunette, une couronne, un poussoir, un maillon de bracelet, un bracelet, une boucle ardillon, un cadran, une aiguille et un index de cadran. Il peut également s'agir d'un composant du mouvement choisi parmi la liste non exhaustive comprenant une roue dentée, un axe, un pignon, un ressort, un pont, une platine, une vis et un balancier.

Les aciers inoxydables selon l'invention ont la composition suivante en poids :
- 26 ≤ Cr ≤ 40%,
- 5 ≤ Ni ≤ 20%,
- 0 ≤ Mn ≤ 5%,
- 0 ≤ Al ≤ 5%,
- 0 ≤ Mo ≤ 3%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.1%,
- 0 ≤ N ≤ 0.1%;
- 0 ≤ S ≤ 0.5%,
- 0 ≤ P ≤ 0.1%,
le solde étant constitué par du fer et des impuretés éventuelles ayant chacune une teneur inférieure ou égale à 0.5%.

De préférence, ils ont la composition suivante en poids :
- 28 ≤ Cr ≤ 38%,
- 5 ≤ Ni ≤ 15%,
- 0 ≤ Mn ≤ 3%,
- 0 ≤ Al ≤ 3%,
- 0 ≤ Mo ≤ 3%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.05%,
- 0 ≤ N ≤ 0.05%,
- 0 ≤ S ≤ 0.5%,
- 0 ≤ P ≤ 0.1%,
avec toujours un solde constitué par du fer et des impuretés éventuelles ayant chacune une teneur inférieure ou égale à 0.5%.

Plus préférentiellement, ils ont la composition suivante en poids :
- 30 ≤ Cr ≤ 36%,
- 5 ≤ Ni ≤ 10%,
- 0 ≤ Mn ≤ 3%,
- 0 ≤ Al ≤ 1%,
- 0 ≤ Mo ≤ 1%,
- 0 ≤ Cu ≤ 1%,
- 0 ≤ Si ≤ 3%,
- 0 ≤ Ti ≤ 1%,
- 0 ≤ Nb ≤ 1%,
- 0 ≤ C ≤ 0.05%,
- 0 ≤ N ≤ 0.05%,
- 0 ≤ S ≤ 0.5%,
- 0 ≤ P ≤ 0.1%,
avec toujours ce même solde en fer et impuretés éventuelles.

Selon l'invention, le procédé de fabrication d'une pièce en acier inoxydable comporte une étape a) de mise à disposition ou réalisation d'une ébauche ayant une composition tombant dans les gammes précitées. Cette ébauche présente une structure majoritairement ferritique ou, de préférence, 100 % ferritique. L'ébauche est obtenue à partir d'une matière de base soumise à un traitement thermique ou thermomécanique à une température comprise dans la gamme 950°C-1450°C suivi d'une trempe. La matière de base peut être sous forme d'une poudre ou d'une matière consolidée. Elle peut être réalisée par coulée, par pressage, par moulage par injection *(MIM : Metal Injection Moulding*), par fabrication additive, et de manière plus large par métallurgie des poudres. Il est envisageable de réaliser la matière de base et le traitement thermique en une seule étape, par exemple, par une technique de fabrication additive avec laser (*SLM: Selective Laser Melting*). Ces différentes techniques permettent de réaliser une ébauche avec une matière de base présentant des dimensions sensiblement égales à celles de la pièce à réaliser, auquel cas une étape de mise en forme ultérieure n'est pas requise.

La composition de la matière de base est optimisée pour obtenir une structure majoritairement ou complètement ferritique lors du maintien à la température comprise entre 950°C et 1450°C pendant un temps compris entre 1 minute et 24 heures. La température est choisie pour obtenir une fraction massique d'austénite inférieure ou égale à 40% et une fraction massique de ferrite supérieure ou égale à 60%. La présence d'austénite permet d'obtenir une dureté minimale et une ductilité maximale pour permettre une mise en forme aisée, par exemple par forgeage, par découpage ou par usinage.

Le traitement thermique ou thermomécanique dans la gamme 950°C-1450°C peut être mis à profit pour réaliser des traitements d'homogénéisation, de recristallisation ou encore de relaxation des contraintes sur des matières de base obtenues par coulée ou pour réaliser des frittages sur des matières de base sous forme de poudre. Le traitement dans le domaine ferritique ou ferritique-austénitique peut être réalisé en un seul cycle ou comporter plusieurs cycles de traitement thermique ou thermomécanique. Il peut également être précédé ou suivi d'autres traitements thermiques ou thermomécaniques.

Après le maintien dans le domaine ferritique ou ferritique-austénitique, l'ébauche est soumise à un refroidissement rapide, aussi qualifié de trempe, jusqu'à une température inférieure à 500°C de manière éviter la formation de nouvelles phases lors du refroidissement. Ainsi, la structure ferritique ou ferritique-austénitique est conservée à température ambiante. Grâce aux compositions selon l'invention, la structure ferritique est suffisamment stable pour être conservée à température ambiante après un refroidissement rapide mais suffisamment métastable pour être facilement et rapidement transformée en phase sigma et en austénite lors d'un traitement thermique subséquent à des températures intermédiaires comprises entre 650°C et 900°C.

A l'issue de l'étape a), l'alliage présente une faible dureté et une grande ductilité permettant le cas échéant une mise en forme aisée, par exemple par forgeage, par découpage ou par usinage.

Après l'étape a), le procédé comporte une étape b) optionnelle de mise en forme de l'ébauche par usinage, découpage ou par toute opération impliquant une déformation telle que le forgeage. Cette étape peut être réalisée en plusieurs séquences. Cette étape n'est pas requise si l'ébauche à l'issue de l'étape a) présente déjà la forme finale de la pièce à fabriquer.

Outre la mise en forme, une opération de déformation plastique peut être mise à profit pour augmenter notamment la vitesse de transformation de la ferrite lors de l'étape subséquente de transformation de la ferrite en austénite et en phase sigma. De plus, comme le durcissement par écrouissage est faible pour les structures ferritiques et que l'alliage selon l'invention est majoritairement ou totalement ferritique avant le traitement par durcissement, cette étape de déformation plastique n'engendre pas de durcissement problématique pour une mise en forme éventuelle par usinage ou découpage. Cette déformation plastique en une ou plusieurs séquences peut être réalisée à une température inférieure à 650°C.

Après l'éventuelle mise en forme, le procédé comporte une étape c) de traitement thermique de durcissement de l'ébauche entre 650°C et 900°C pour obtenir les propriétés finales. La durée du traitement thermique entre 650°C et 900°C est fixée de façon à garantir une transformation totale de la ferrite et donc l'obtention d'une microstructure formée d'une phase sigma et d'une phase austénitique.

La vitesse de transformation de la ferrite en austénite + phase sigma dépend notamment de la composition de l'alliage et de son histoire thermomécanique comme mentionné précédemment. De manière générale, la durée du traitement se situe entre 30 minutes et 24 heures. Après le traitement de durcissement, l'acier présente une fraction massique de phase sigma comprise entre 40% et 80% et une fraction massique d'austénite comprise entre 20% et 60%, les pourcentages étant fonction de la composition chimique et des traitements thermiques réalisés. La pièce ainsi obtenue a une dureté élevée comprise entre 500 et 900 HV10 grâce au traitement thermique de durcissement. Comme pour tous les aciers inoxydables, d'éventuelles inclusions non métalliques peuvent également être présentes en faible quantité, sans que cela n'affecte les propriétés mécaniques et magnétiques. De plus, des inclusions permettant d'améliorer l'usinabilité, comme par exemple des sulfures de manganèse, peuvent également être présentes en faible quantité dans l'alliage.

Cette étape de traitement thermique de durcissement peut être suivie d'une éventuelle étape d) de finition de surface telle que du polissage.

Par ailleurs, en présence d'une ébauche avec une structure austénite + ferrite à l'étape a), le procédé de fabrication peut comporter une étape additionnelle b') avant le traitement thermique de durcissement, dans la gamme de température 950°C-1450°C pour transformer la structure austénite + ferrite en une structure 100% ferritique.

En résumé, après le traitement thermique à haute température (950°C-1450°C) suivi d'une trempe, les aciers présentent notamment les propriétés suivantes :
- Dureté entre 150 et 400 HV10.
- Bonne ductilité avec une déformation plastique sans fissuration supérieure à 50% en compression à température ambiante.
- Comportement ferromagnétique, dû à la présence de ferrite.

Après le traitement thermique de durcissement, les aciers selon l'invention présentent notamment les propriétés suivantes :
- Dureté entre 500 et 900 HV10.
- Comportement paramagnétique.
- Excellente polissabilité, grâce à la microstructure très fine.
- Bonne résistance à l'usure.
- Bonne résistance à la corrosion.

Concernant la résistance à la corrosion, l'acier selon l'invention est particulièrement performant grâce à la haute concentration en chrome. Ces aciers sont donc particulièrement intéressants pour des composants d'habillage.

Pour finir, l'invention est illustrée à l'aide des exemples ci-après.

### Exemples

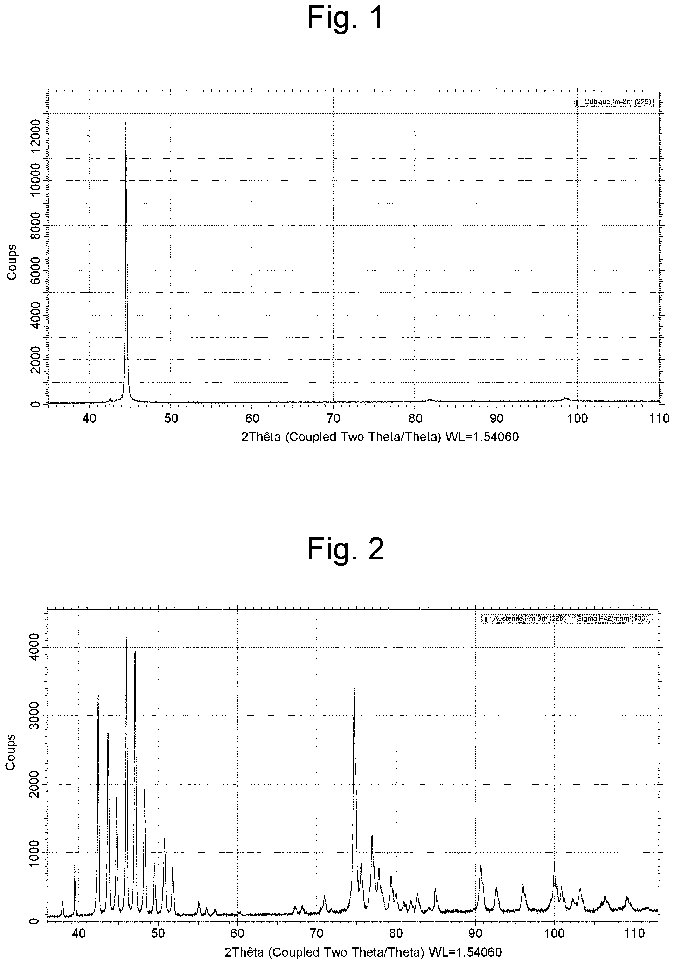

Dans un premier exemple, l'acier nommé Fe35Cr9Ni contient en pourcentages massiques 56% de fer, 35% de chrome et 9% de nickel. Il a été fabriqué par fusion à l'arc à partir d'éléments de haute pureté (> 99.9%), déformé à température ambiante par compression avec une réduction de l'épaisseur d'un facteur 2 et soumis à un traitement thermique d'homogénéisation dans le domaine ferritique à 1300°C pendant 2 heures dans une atmosphère d'argon suivi d'une trempe au gaz (env. 200K/min). Après ce traitement thermique d'homogénéisation, l'alliage Fe35Cr9Ni présente une microstructure ferritique monophasée avec une dureté Vickers de 350 HV10. La structure totalement ferritique (groupe d'espace *Im3m*) est confirmée par l'analyse par diffractométrie à rayons X (XRD) tel que représenté à la figure 1. Après homogénéisation, un traitement thermique de durcissement a été réalisé à 800°C pendant 6 heures. Une microstructure fine, homogène et biphasée comprenant la phase austénitique et la phase sigma est obtenue. L'analyse par diffractométrie à rayon X montrée à la figure 2 confirme la présence d'austénite (groupe d'espace *Fm3m*) et d'une structure tétragonale correspondant à la phase sigma (groupe d'espace *P42*/*mnm)*

Dans cet état métallurgique, l'alliage Fe35Cr9Ni présente une dureté Vickers de 670 HV10. Sa résistance à la corrosion a été évaluée en réalisant un test au brouillard salin selon la norme ISO 9227. Après le test, l'alliage ne montre aucun signe de corrosion, démontrant son excellente résistance à la corrosion en milieu salin. Cela est d'autant plus remarquable que la présence de phase sigma, même en faible proportion, a toujours engendré une forte réduction de la résistance à la corrosion dans les aciers inoxydables.

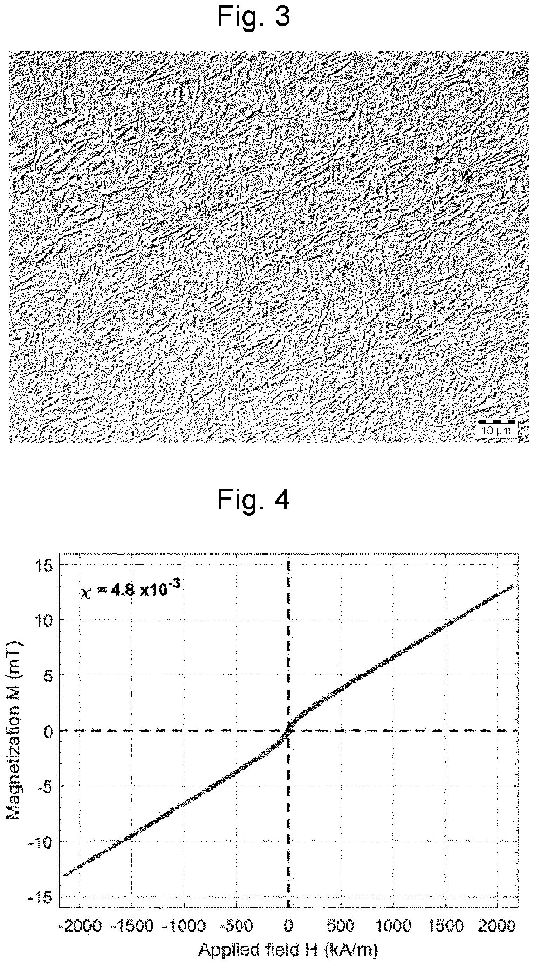

Dans un second exemple, l'acier nommé Fe32Cr9Ni contient en pourcentages massiques 59% de fer, 32% de chrome et 9% de nickel. Il a également été fabriqué par fusion à l'arc à partir d'éléments de haute pureté (> 99.9%), soumis à un traitement thermique d'homogénéisation à 1300°C pendant 2 heures sous argon suivi d'une trempe au gaz, déformé à température ambiante par compression avec une réduction de l'épaisseur d'un facteur 2, soumis à un traitement thermique de recristallisation à 1200°C sous air pendant 1 minute suivi d'une trempe à l'eau. Après ce traitement thermique de recristallisation, l'alliage Fe32Cr9Ni présente une microstructure ferritique monophasée avec une dureté Vickers de 220 HV10. Ensuite, il a été porté à 700°C pendant 6 heures sous vide. La microstructure observée en microscopie optique sous lumière polarisée est représentée à la figure 3. On observe une fine répartition des deux phases avec en relief la phase austénitique et en matrice la phase sigma. Dans cet état métallurgique, l'alliage Fe32Cr9Ni présente une dureté Vickers de 635 HV10. Concernant les propriétés magnétiques de cet acier, la courbe d'hystérèse a été mesurée à température ambiante avec un magnétomètre à échantillon vibrant (aimantation M en fonction du champ appliqué H). Bien que présentant une susceptibilité volumique relativement élevée, cet acier présente un comportement linéaire signature du comportement paramagnétique (fig.4).

## Revendications

1. Acier inoxydable paramagnétique avec une composition chimique comprenant en poids :
- 26 ≤ Cr ≤ 40%,
- 5 ≤ Ni ≤ 20%,
- 0 ≤ Mn ≤ 5 %,
- 0 ≤ Al ≤ 5%,
- 0 ≤ Mo ≤ 3%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.1%,
- 0 ≤ N ≤ 0.1%
- 0 ≤ S ≤ 0.5%,
- 0 ≤ P ≤ 0.1 %,
le solde étant constitué par du fer et des impuretés éventuelles ayant chacune une teneur inférieure ou égale à 0.5%,
ledit acier ayant une dureté HV10 comprise entre 500 et 900.

2. Acier selon la revendication 1, avec une composition chimique comprenant en poids :
- 28 ≤ Cr ≤ 38%,
- 5 ≤ Ni ≤ 15%,
- 0 ≤ Mn ≤ 3%,
- 0 ≤ Al ≤ 3%,
- 0 ≤ Mo ≤ 3%,
- 0 ≤ Cu ≤ 2%,
- 0 ≤ Si ≤ 5%,
- 0 ≤ Ti ≤ 1%,
- 0 ≤ Nb ≤ 1%,
- 0 ≤ C ≤ 0.05%
- 0 ≤ N ≤ 0.05%,
- 0 ≤ S ≤ 0.5%,
- 0 ≤ P ≤ 0.1%.

3. Acier selon la revendication 1 ou 2, avec une composition chimique comprenant en poids :
- 30 ≤ Cr ≤ 36%,
- 5 ≤ Ni ≤ 10%,
- 0 ≤ Mn ≤ 3%,
- 0 ≤ Al ≤ 1%,
- 0 ≤ Mo ≤ 1%,
- 0 ≤ Cu ≤ 1%,
- 0 ≤ Si ≤ 3%,
- 0 ≤ Ti ≤ 1%,
- 0 ≤ Nb ≤ 1%,
- 0 ≤ C ≤ 0.05%,
- 0 ≤ N ≤ 0.05%,
- 0 ≤ S ≤ 0.5%,
- 0 ≤ P ≤ 0.1%,

4. Acier selon l'une des revendications précédentes, **caractérisé en ce qu'**il a une microstructure formée d'une phase sigma comprise dans un pourcentage massique compris entre 40 et 80% et d'une phase austénitique comprise dans un pourcentage massique compris entre 20 et 60%.

5. Pièce réalisée dans l'acier selon l'une des revendications précédentes.

6. Pièce selon la revendication 5, **caractérisée en ce qu'**il s'agit d'un composant horloger d'habillage ou du mouvement.

7. Montre comprenant le composant horloger selon la revendication 6.

8. Procédé de fabrication d'une pièce en acier inoxydable paramagnétique, **caractérisé en ce qu'**il comporte les étapes successives suivantes :
a) Mise à disposition ou réalisation d'une ébauche ayant sensiblement la forme de la pièce à fabriquer ou étant de forme différente, l'ébauche ayant une composition chimique selon l'une des revendications 1 à 3 et possédant une structure majoritairement ou complètement ferritique,
b) Mise en forme de l'ébauche si ladite ébauche de l'étape a) présente une forme différente de la pièce à fabriquer,
c) Traitement thermique, dit traitement de durcissement, de l'ébauche pour obtenir la pièce, le traitement de durcissement étant réalisé à une température comprise entre 650 et 900°C pendant un temps compris entre 30 minutes et 24 heures pour transformer la ferrite de ladite structure en une phase austénitique et une phase intermétallique sigma, le traitement de durcissement étant suivi d'un refroidissement jusqu'à température ambiante.

9. Procédé de fabrication selon revendication 8, **caractérisé en ce que** la structure majoritairement ou complètement ferritique de l'ébauche à l'étape a) a été réalisée en effectuant un traitement thermique ou thermomécanique sur une matière de base à une température comprise entre 950 et 1450°C pendant un temps compris entre 1 minute et 24 heures, le traitement thermique ou thermomécanique étant suivi d'une trempe jusqu'à une température inférieure à 500°C pour conserver la structure ferritique à température ambiante.

10. Procédé de fabrication selon la revendication précédente, **caractérisé en ce que** la matière de base est sous forme d'une poudre ou d'un matériau consolidé.

11. Procédé de fabrication selon la revendication 9 ou 10, **caractérisé en ce que** la matière de base a été obtenue par coulée, par pressage, par moulage par injection, par fabrication additive ou par métallurgie des poudres.

12. Procédé de fabrication selon la revendication 8, **caractérisé en ce que** l'ébauche de l'étape a) est réalisée par fabrication additive avec laser.

13. Procédé de fabrication selon l'une des revendications 8 à 12, **caractérisé en ce que** la structure de l'ébauche à l'étape a) comporte une fraction massique d'austénite inférieure ou égale à 40% et une fraction massique de ferrite supérieure ou égale à 60%.

14. Procédé de fabrication selon l'une des revendications 8 à 13, **caractérisé en ce que** la structure de l'ébauche à l'étape a) comporte 100% de ferrite.

15. Procédé de fabrication selon l'une des revendications 8 à 14, **caractérisé en ce que**, à l'issue de l'étape a), l'ébauche a une dureté comprise entre 150 et 400 HV10.

16. Procédé de fabrication selon l'une des revendications 8 à 15 **caractérisé en ce que** l'étape de mise en forme b) comporte une ou plusieurs séquences de déformation plastique à une température inférieure à 650°C.

17. Procédé de fabrication selon l'une des revendications 8 à 16, **caractérisé en ce que** l'étape b) de mise en forme est réalisée par forgeage, découpage ou usinage.

18. Procédé de fabrication selon la revendication 9, **caractérisé en ce que** le traitement thermique ou thermomécanique est réalisé en plusieurs cycles.

19. Procédé de fabrication selon la revendication 13, **caractérisé en ce que**, lorsque la structure comporte de l'austénite, le procédé comporte, avant l'étape c), une étape b') de traitement thermique ou thermomécanique sur l'ébauche à une température comprise entre 950°C et 1450°C pendant un temps compris entre 1 minute et 24 heures pour obtenir une structure complètement ferritique, le traitement thermique ou thermomécanique étant suivi d'une trempe jusqu'à une température inférieure à 500°C pour conserver la structure complètement ferritique à température ambiante.
